## Europäisches Patentamt

## European Patent Office

## Office européen des brevets

(11) Veröffentlichungsnummer : **0 368 110 B1**

(12) **EUROPÄISCHE PATENTSCHRIFT**

(45) Veröffentlichungstag der Patentschrift :
**15.07.92 Patentblatt 92/29**

(21) Anmeldenummer : **89120075.0**

(22) Anmeldetag : **28.10.89**

(51) Int. Cl.⁵ : $G05D\ 23/13$, $F24D\ 1/00$

(54) **Dampf-Wasser-Mischer.**

Verbunden mit 89912432.5/0441848
(europäische
Anmeldenummer/Veröffentlichungsnummer)
durch Entscheidung vom 04.09.91.

(30) Priorität : **05.11.88 DE 3837728**

(43) Veröffentlichungstag der Anmeldung :
**16.05.90 Patentblatt 90/20**

(45) Bekanntmachung des Hinweises auf die
Patenterteilung :
**15.07.92 Patentblatt 92/29**

(84) Benannte Vertragsstaaten :
**AT BE CH DE ES FR GB GR IT LI LU NL SE**

(56) Entgegenhaltungen :
**EP-A- 0 263 198**
**DE-A- 3 402 819**
**DE-A- 3 636 689**
**DE-C- 727 244**
**FR-A- 2 518 242**
**GB-A- 2 085 121**

(56) Entgegenhaltungen :
**US-A- 2 006 035**
**US-A- 2 335 250**
**US-A- 2 455 498**
**PATENT ABSTRACTS OF JAPAN vol. 10, no.
364 (P-524)(2421) 5 Dezember 1986, & JP-A-61
160117 (MATSUSHITA ELECTRICINDUSTRIAL
Co. LTD) 19 Juli 1986,
PATENT ABSTRACTS OF JAPAN vol. 11, no.
97 (P-560)(2544) 26 März 1987, & JP-A-61
248112 (MATSUSHITA ELECTRIC INDU-
STRIALCo. LTD) 5 November 1986,**

(73) Patentinhaber : **Henkel
Kommanditgesellschaft auf Aktien
Postfach 1100 Henkelstrasse 67
W-4000 Düsseldorf 1 (DE)**

(72) Erfinder : **Lenk, Günter
Ellscheider Strasse 3
W-5657 Haan (DE)**
Erfinder : **Janas, Peter
Behrensstrasse 9
W-4000 Düsseldorf (DE)**
Erfinder : **Ojust, Klaus
Am Langen Weiher 51
W-4000 Düsseldorf (DE)**

EP 0 368 110 B1

## Beschreibung

Die Erfindung betrifft einen Dampf-Wasser-Mischer mit je einem Einlaß für Wasserdampf und für Wasser, mit einem Behälter zum Mischen von Dampf und Wasser, mit einem Auslaß dieses Mischbehälters für das erwärmte Wasser und mit einem innerhalb des Mischbehälters zwischen dem oder den Dampf-Einlässen und dem oder den Wasser-Einlässen derart angeordneten Material, so daß der in den Mischbehälter eintretende Dampf nur durch dieses Material hindurch zum Wasser-Einlaß oder zum Auslaß des Mischbehälters gelangt.

In Dampf-Wasser-Mischern werden Dampf und Wasser miteinander gemischt, um erwärmtes Wasser zu erhalten. Da häufig dieses Wasser für Reinigungszwecke benutzt wird, wird Brauchwasser verwendet. Solches, nicht vorgereinigtes Wasser führt aber oft zu einem Ausfall der vielen mechanischen Teile. Außerdem führt der ausfallende Kalk zu Verkrustungen, die das vorher eingestellte Mischungsverhältnis verändern. Dadurch besteht die Gefahr, daß aus dem Auslaß nur noch Dampf ausströmt. Der heiße Dampf führt zu Verbrühungen und Unfällen. Besonders gefährlich ist es, daß dieser Dampf bei den Mischern oft plötzlich austritt.

Ein anderes Problem bei den Dampf-Wasser-Mischern besteht in der nur begrenzten Einsatzfähigkeit. Wenn nämlich die Ausflußöffnung für das erwärmte Wasser angehoben wird (Erhöhung des Wirkdruckes), um zum Beispiel höherliegende Teile zu reinigen, verändert sich das Mischungsverhältnis derart, daß nur noch kaltes Wasser dem Auslaß entströmt.

Aus der DE-OS 34 02 819 A1 ist ein Dampf-Wasser-Mischer bekannt. Um eine geräusch- und störungsarme Einleitung von Dampf in Wasser zu gestatten, wird im Mischbehälter dieses Mischers eine Anzahl dampfdurchströmter Tauchrohre vorgesehen, deren Einlaßseiten mit der Dampfzuführung verbunden sind, deren Austrittsenden offen in der Flüssigkeit münden und die eine gegenüber dem freien Rohrquerschnitt verengte Austrittsöffnung aufweisen. Die Innenkontur des Rohr-Austrittsendabschnittes bildet außerdem einen düsenartigen Übergang von der Rohr-Innenwandung zur Austrittsöffnung.

Aus der JP 61-248112, veröffentlich in Patent Abstracts of Japan, Vol. 11 vom 26.03.87, ist eine Mischarmatur für kaltes und warmes Wasser bekannt, bei der jedoch das Heißwasserventil erst dann geöffnet wird, wenn vorher schon ein Kaltwasserventil geöffnet wurde.

Ferner ist aus der JP 61-160117, veröffentlich in Patent Abstracts of Japan, Vol. 10 vom 5.12.86, eine Mischungsregelung für warmes und kaltes Wasser bekannt, bei der die Temperatur des Wassers im Auslaß mit einem Thermofühler gemessen wird und dann die Temperatur des Wassers im Auslaß mittels zweier über eine Stange gekoppelter Ventilglieder auf einen vorgegebenen Wert geregelt wird.

Ein Mischer des eingangs gennanten Art ist aus FR-A-2 518 242 bekannt. Dieser weist einen Mischbehälter auf, in dem durch seinen Dampfeinlaß einströmender Wasserdampf und durch seinen Wasserzulauf aus einem Wärmetauscher einströmendes, zu erwärmendes Wasser miteinander gemischt werden. Der Wärmetauscher wiederum dient vorzugsweise zur Erwärmung und Pasteurisierung von Milch.

In dem Mischbehälter ist ein mit Perforationen versehener Hohlzylinder so angeordnet, daß der in den Mischbehälter eintretende Dampf nur durch die Perforationen des Hohlzylinders hindurch zum Wassereinlaß oder zum Auslaß des Mischbehälters gelangen kann. Dieser Hohlzylinder weist auf seiner hohlzylindrischen Innenseite mit dem Dampfeinlaß in Verbindung stehende Perforationen auf und ist im Bereich zwischen Innenseite und Außenseite mit einem ein Layrinth bildendes Material gefüllt. Dieses Material kann vorzugsweise Wolle oder Metallspäne sein.

Ferner ist aus dem Fachlexikon ABC Physik, Verlag Harri Deutsch, Zürich und Frankfurt/M, 1974, Band 2: M - Z; Seite 1393, Abschnitt "Sintern" die poröse Eigenschaft von Sintermaterial dem Fachmann schon lange bekannt. Sintermaterialien werden wegen ihres porösen und kompakten Aufbaus schon lange für Zwecke eingesetzt, wo es auf diese Eigenschaften ankommt, z. B. als Filterpatrone in den Trinkwasserzuleitungen oder als Wärmetauscher bei einem Dampfstrahlverdichter für einen ähnlichen Mischzweck.

Der Erfindung liegen die Aufgaben zugrunde, bei einem Dampf-Wasser-Mischer der eingangs genannten Art eine Verminderung der Geräuschentwicklung und eine Feinstverteilung des ausfallenden Kalkes zu erreichen.

Diese Aufgaben sind in den beiden letztgenannten Dokumenten nicht erwähnt. Sie werden erfindungsgemäß dadurch gelöst, daß das Material als Sintermaterial ausgebildet ist. Das Sinter-Material kann dabei Keramik oder Metall sein. Da vor dem Mischvorgang der Dampf durch den Hohlzylinder strömt und damit feinstverteilt durch das Wasser perlt, fällt der im Wasser enthaltende Kalk ebenfalls sehr fein verteilt aus und bildet keine Verkrustungen. Dieser fein verteilte Kalk wird problemlos mit dem erwärmten Wasser aus dem Dampf-Wasser-Mischer ausgetragen. Da erfindungsgemäß im Mischbehälter sich nur feinperliger Dampf und Wasser mischen, werden auch die Kavitationsgeräusche erheblich herabgesetzt.

Besonders vorteilhaft ist, wenn das Sinter-Material die Form eines Hohlzylinders hat.

Aus der DE-OS 36 36 689 ist zwar ein Durchlauf-Dampferzeuger bekannt, der eine aus porösem Sinter-Material bestehende Filterkerze aufweist. Diese Filterkerze dient jedoch der Abscheidung von Schwebstoffen und Kesselstein aus dem Speisewasser, das zur Erzeugung von Dampf dient. Ferner enthält dieser bekannte Dampferzeuger einen aus Sinter-Metall bestehenden Wärmeaustauscher. Bei diesem bekannten Dampferzeuger geht es nicht um die Heißwasserbereitung aus Kaltwasser und Dampf, sondern um die Dampferzeugung.

Um ferner die Betriebssicherheit des Dampf-Wasser-Mischers noch weiter zu erhöhen und einen breiteren Anwendungsbereich zu ermöglichen, werden außerdem ein zwischen dem Wasser-Einlaß und dem Mischbehälter angeordneter Durchflußmesser, der ein zwischen dem Dampfeinlaß und dem Mischbehälter angeordnetes Dampfventil nur bei Überschreiten eines Mindestwasserstroms im Wassereinlaß offenhält, und ein am Auslaß angeordneter, die Temperatur des austretenden Wassers messender Thermofühler, der mit einer Steuereinrichtung verbunden ist, die die Temperatur des Wassers im Auslaß über das Dampfventil auf einen vorgegebenen Wert regelt, vorgeschlagen.

Das Dampfventil wird also nur freigegeben, wenn sowohl der notwendige Wasserdurchfluß vorhanden ist als auch die eingestellte Temperatur nicht überschritten wird. Durchflußmesser und Thermofühler gewährleisten jeder für sich einen sicheren Betrieb des Heißwassermischers, so daß an die innere Sicherheit von Durchflußmesser und Thermofühler, des zugehörigen Verstärkers und der nachfolgenden elektrischen Steuerung keine besonderen Anforderungen zu stellen sind.

Daher ist ohne geöffnetes Wassereinlaßventil ein Öffnen des Dampfventils nicht möglich. Sollte während des Betriebs das Wassereinlaßventil geschlossen werden oder der Wasserdruck absinken, wird infolge der Temperatursteigerung im Wasserauslaß über den vorgegebenen Wert hinaus das Dampfventil geschlossen. Die vorgesehene, mit einem Thermofühler verbundene Steuereinrichtung kann innerhalb kürzester Zeit auf eine Veränderung der Temperatur im Wasserauslaß reagieren.

Wird beim erfindungsgemäßen Mischer der erforderliche Wirkdruck z. B. durch Vergrößern der Höhendifferunz zwischen dem Mischbehälter und dem Auslaß für das erwärmte Wasser, etwa durch ein Anheben des daran angeschlossenen Schlauches, erhöht, bleibt die Temperatur im ausströmenden Wasser erhalten. Auch ein Vergrößern der Höhendifferenz um fünf Meter und mehr ändert nicht die Wassertemperatur.

Beim erfindungsgemäßen Mischer ist es ferner möglich, mehrere Zapfstellen für Heißwasser, sogar in unterschiedlicher Höhe, mit nur einem Mischbehälter vorzusehen. Damit läßt sich ein Heißwassernetz aufbauen.

Um die Betriebssicherheit des erfindungsgemäßen Dampf-Wasser-Mischers zu erhöhen, wird weiter vorgeschlagen, daß dieser Mischer einen das Dampfventil betätigenden, vom Durchflußmesser und der Steuereinrichtung angesteuerten Antrieb mit einer Rückstellung aufweist, die im nicht angesteuerten Zustand oder bei Ausfall der Energieversorgung für den Antrieb das Dampfventil schließt. In der Grundstellung des Dampf-Wasser-Mischers ist also das Dampfventil geschlossen. Sollte ein Defekt, zum Beispiel ein Kabelbruch, auftreten, schließt das Dampfventil selbsttätig. Verbrühungen werden damit auf jeden Fall verhindert. Das gleiche passiert beim Ausfall des elektrischen Stromes oder der Steuerluft. Ist nach einem Abschalten des Mischers wieder ein ausreichend großer Wasserstrom vorhanden, wird das Dampfventil nicht sofort, sondern erst dann geöffnet, wenn die Mindest-Wassermenge fließt. Ein Durchschlagen des Dampfes ist nicht möglich.

Vorgeschlagen wird weiterhin, daß die Rückstellung eine Federrückholung ist. Diese Federrückholung ist besonders betriebssicher.

In weiteren Ausgestaltungen zur Verbesserung der Betriebssicherheit werden zum einen ein zwischen dem Dampfventil und dem Mischbehälter angeordnetes Rückschlagventil und zum anderen ein zwischen dem Durchflußmesser und dem Mischbehälter angeordnetes weiteres Rückschlagventil vorgeschlagen. Diese Ventile verhindern das Eintreten von Dampf in die Wasserleitung und umgekehrt.

Ein Ausführungsbeispiel der Erfindung wird nachstehend anhand von Zeichnungen beschrieben. Es zeigen:

Figur 1 eine Seitenansicht eines Dampf-Wasser-Mischers gemäß der Erfindung mit einem Längsschnitt des Mischbehälters,

Figur 2 eine Seitenansicht des Mischers von Figur 1 aus einer rechtwinklig dazu liegenden Blickrichtung,

Figur 3 ein Schaltbild der Steuerung des Mischers nach den Figuren 1 und 2 und

Figur 4 einen vergrößerten Längsschnitt aus einem Teil des Mischbehälters nach Figur 1.

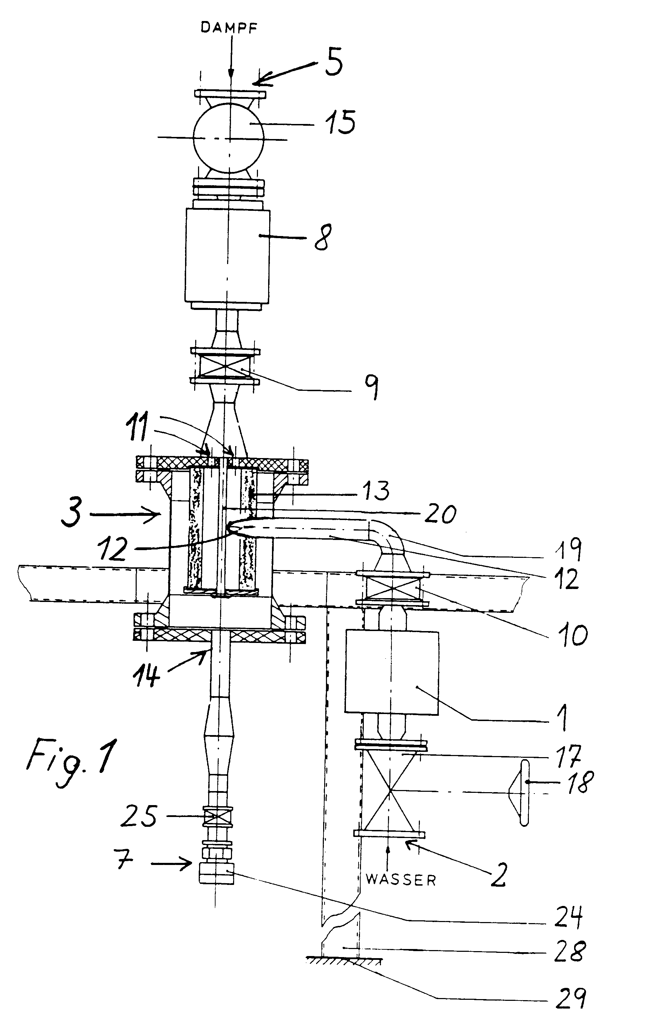

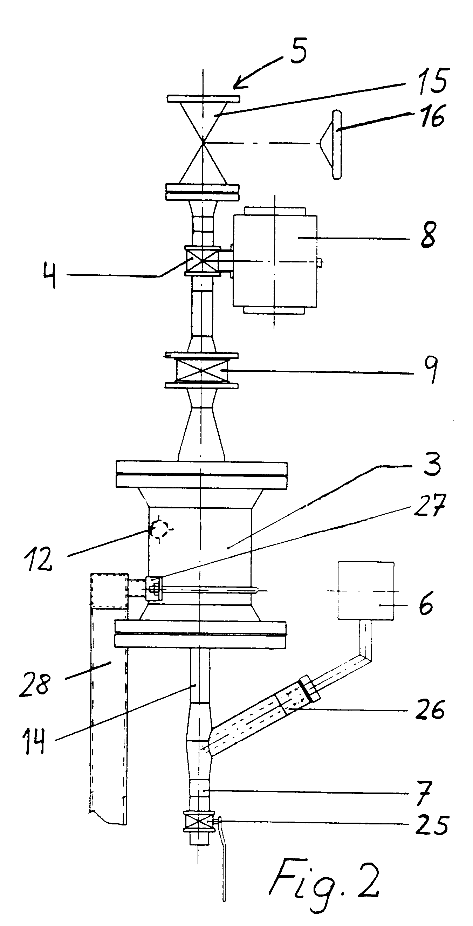

Der Dampf-Wasser-Mischer besteht im wesentlichen aus einem in den Figuren 1 und 2 oben angeordneten Dampfeinlaß 5, einem in den Zeichnungen unten links dargestellten Auslaß 7, einem daneben rechts dargestellten Wassereinlaß 2 und einem zwischen den Ein- und Auslässen angeordneten Mischbehälter 3. Der Dampf strömt durch den Dampfeinlaß 5 über das Durchgangsventil 15, das mit dem Handrad 16 betätigbar ist, durch das Dampfventil 4 und das Rückschlagventil 9 und schließlich durch die Dampfeinlässe 11 in den Mischbehälter 3. Das zwischen Durchgangsventil 15 und Rückschlagventil 9 angeordnete Dampfventil 4 wird von einem Drehantrieb 8, der eine Federrückstellung aufweist, pneumatisch betätigt. Bei dem Dampfventil 4 handelt es sich um einen Kugelhahn. Wie nachstehend noch ausgeführt wird, wird der Antrieb 8 elektrisch vom Durchflußmesser 1 gesteuert. Die Schaltzeit beträgt weniger als eine Sekunde.

Der aus einem Dampfnetz mit 4 bar stammende Dampf wird im Mischbehälter 3 mit Wasser aus einem Brauchwassernetz vermischt, das beim Wassereinlaß 2 in den Mischer strömt. Am Wassereinlaß 2 ist ebenfalls ein Durchgangsventil 17, das durch ein Handrad 18 betätigbar ist, vorgesehen. Nach Durchfließen des Durchgangsventils 17 strömt das Wasser durch den Durchflußmesser 1, der nur bei Vorliegen einer Mindestwassermenge den Antrieb 8 so steuert, daß das Dampfventil 4 geöffnet wird und bleibt. Nach Durchströmen des Durchflußmessers 1 fließt das Wasser durch ein weiteres Rückschlagventil 10 und durch einen 90-Grad-Bogen 19 tangential beim Wassereinlaß 12 in den Mischbehälter 3.

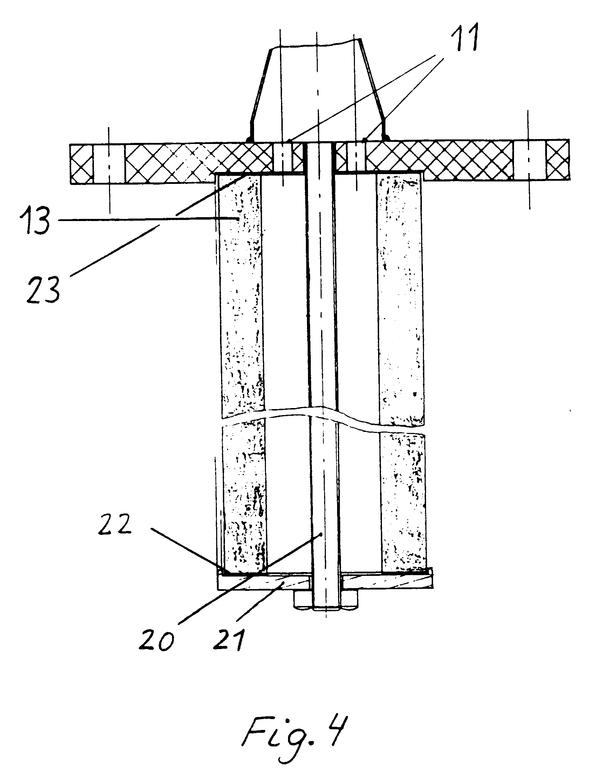

Bevor Wasser und Dampf aufeinander treffen, strömt der Dampf innerhalb des Mischbehälters 3 durch einen Hohlzylinder 13 aus Sinter-Material. Dieser Zylinder 13 wird innerhalb des Mischbehälters 3 durch eine Gewindestange 20 und eine Konterplatte 21 gehalten. Gegenüber dieser Konterplatte 21 zum einen und dem gegenüberliegenden Flansch des Mischbehälters 3 zum anderen ist der Zylinder 13 durch jeweils eine Dichtung 22, 23 abgedichtet. Diese Einzelheiten sind besonders gut in Figur 4 zu erkennen.

Nach dem Durchmischen von Dampf und Wasser strömt das erwärmte Wasser durch den Auslaß 14 des Mischbehälters 3 und ein Rohrstück zum Auslaß 7 des Dampfwasser-Mischers. Am Ende dieses Auslasses ist eine Kupplung 24 zum Beispiel zum Anschließen von Schläuchen vorgesehen. Noch vor der Kupplung 24 ist zum Absperren von Hand ein Kugelhahn 25 eingebaut.

In Figur 2 ist das thermische Überwachungssystem des Dampf-Wasser-Mischers dargestellt. An einer seitlich abzweigenden Muffe 26 ist eine Steuereinrichtung 6 angebaut, die mit einem in der Zeichnung nicht sichtbaren Thermofühler verbunden ist. Der Thermofühler mißt die Temperatur des aus dem Mischbehälter 3 austretenden Wassers. Die Steuereinrichtung 6 wirkt ebenfalls auf den Antrieb 8 des Dampfventils 4. Über diese Steuereinrichtung und den Thermofühler wird die gewünschte maximale Temperatur des austretenden Wassers eingestellt.

Über eine Rohrschelle 27 und Profilstücke 28 ist der Dampf-Wasser-Mischer mit einer Bodenplatte 29 fest verbunden. Der dargestellte Dampf-Wasser-Mischer liefert zwischen 500 und 2.500 Liter pro Stunde bis zu 90 Grad Celsius heißen Wassers und ist ausgelegt auf einen Anschluß an ein Dampfnetz mit 4 bar. Für eine größere Heißwassermenge ist ein entsprechend größerer Mischer einzusetzen. Die besonders hohe Betriebssicherheit ergibt sich auch durch die kurze Schaltzeit des einen Schlitzinitiator aufweisenden Durchflußmessers 1.

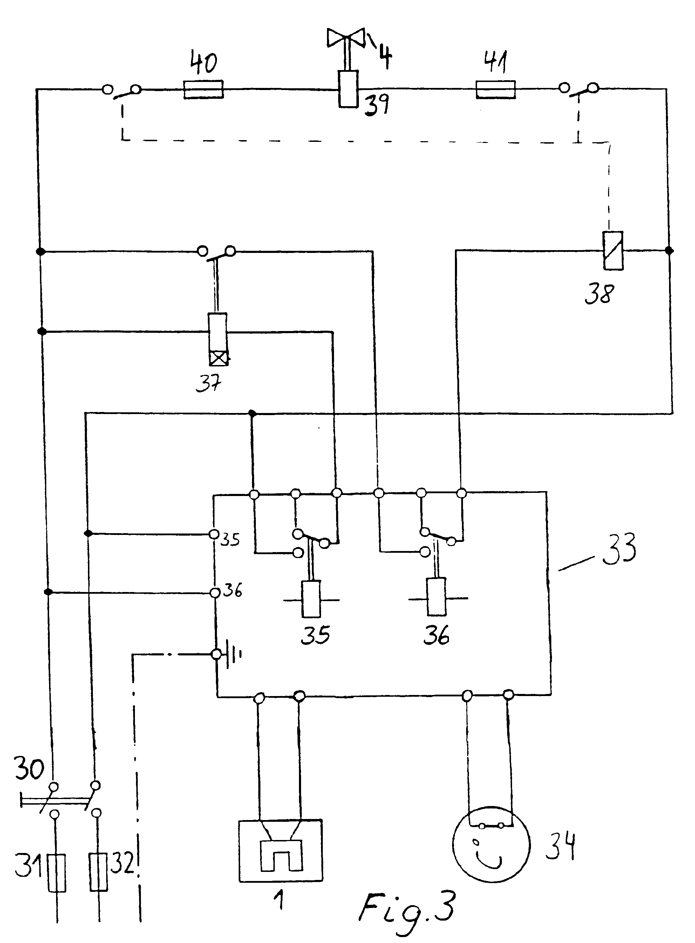

In Figur 3 ist das zu dem Mischer nach den Figuren 1, 2 und 4 zugehörige Schaltbild dargestellt. Der Mischer wird mit dem Schalter 30 eingeschaltet. Zwischen dem Schalter 30 und dem Stromnetz liegen zwei Sicherungen 31, 32. Das zentrale Bauelement in dieser Schaltung ist das Trennschaltgerät 33. Es empfängt die den Zustand des Mischers beschreibenden Signale vom Durchflußmesser 1 und vom Thermofühler 34. Über die Anschlüsse 35 und 36 wird das Trennschaltgerät mit elektrischer Energie versorgt. Durchflußmesser 1 und Thermofühler 34 steuern innerhalb des Trennschaltgerätes 2 die Relais 35 und 36. Die Schaltung ist, wie aus Figur 3 zu erkennen ist, so ausgelegt, daß die beiden weiteren Relais 37 und 38 nur dann den Stromkreis schließen, wenn beide Relais 35 und 36 gleichzeitig angesprochen sind. In diesem Fall wird das Magnetventil 39 unter Strom gesetzt, welches das Dampfventil 4 öffnet. Zum Erhöhen der Betriebssicherheit ist der Ansteuerstromkreis des Magnetventils 39 durch zwei, unmittelbar vor und hinter das Magnetventil 39 geschaltete Sicherungen 40, 41 abgesichert.

**Patentansprüche**

1. Dampf-Wasser-Mischer mit je einem Einlaß für Wasserdampf und für Wasser, mit einem Behälter (3) zum Mischen von Dampf und Wasser, mit einem Auslaß (7) dieses Mischbehälters (3) für das erwärmte Wasser und mit einem innerhalb des Mischbehälters (3) zwischen dem oder den Dampf-Einlässen (11) und dem oder den Wasser-Einlässen derart angeordneten Material (13), so daß der in den Mischbehälter (3) eintretende Dampf nur durch dieses Material (13) hindurch zum Wasser-Einlaß (12) oder zum Auslaß (14) des Mischbehälters (3) gelangt,
dadurch gekennzeichnet,
daß das Material als Sintermaterial (13) ausgebildet ist.

2. Mischer nach Anspruch 1,
dadurch gekennzeichnet,
daß das Sinter-Material (13) die Form eines Hohlzylinders hat.

3. Mischer nach Anspruch 1 oder 2,
gekennzeichnet durch
a) einen zwischen dem Wasser-Einlaß (2) und dem Mischbehälter (3) angeordneten Durchflußmesser (1), der ein zwischen dem Dampfeinlaß (5) und dem Mischbehälter (3) angeordnetes Dampfventil (4) nur bei Überschreiten eines Mindestwasserstroms im Wassereinlaß (2) offenhält, und

b) einen am Auslaß (7) angeordneten, die Temperatur des austretenden Wassers messenden Thermofühler, der mit einer Steuereinrichtung (6) verbunden ist, die die Temperatur des Wassers im Auslaß (7) über das Dampfventil (4) auf einen vorgebebenen Wert regelt.

4. Mischer nach Anspruch 3,
gekennzeichnet durch
einen das Dampfventil (4) betätigenden, vom Durchflußmesser (1) und der Steuereinrichtung (6) angesteuerten Antrieb (8) mit einer Rückstellung, die im nichtangesteuerten Zustand oder bei Ausfall der Energieversorgung für den Antrieb (8) das Dampfventil (4) schließt.

5. Mischer nach Anspruch 4,
dadurch gekennzeichnet,
daß die Rückstellung eine Federrückholung ist.

6. Mischer nach einem der Ansprüche 3 bis 5,
gekennzeichnet durch
ein zwischen dem Dampfventil (4) und dem Mischbehälter (3) angeordnetes Rückschlagventil (9).

7. Mischer nach einem der Ansprüche 3 bis 6,
gekennzeichnet durch
ein zwischen dem Durchflußmesser (1) und dem Mischbehälter (3) angeordnetes Rückschlagventil (10).

## Claims

1. A steam/water mixer comprising an inlet for steam and an inlet for water, a vessel (3) for mixing steam and water, an outlet (7) of the mixing vessel (3) for the heated water and a material (13) arranged in the mixing vessel (3) between the steam inlet(s) (11) and the water inlet(s) in such a way that the steam entering the mixing vessel (3) only passes through this material (13) to the water inlet (12) or to the outlet (14) of the mixing vessel (3),
characterized in that
the material (13) is a sintered material.

2. A mixer as claimed in claim 1,
characterized in that
the sintered material (13) is in the form of a hollow cylinder.

3. A mixer as claimed in claim 1 or 2,
characterized by
a) a throughflow meter (1) which is arranged between the water inlet (2) and the mixing vessel (3) and which keeps open a steam valve (4) arranged between the steam inlet (5) and the mixing vessel (3) only when a minimum water flow in the water inlet (2) is exceeded and
b) a thermocouple which is arranged at the outlet (7) to measure the temperature of the outflowing water and which is connected to a controller (6) which regulates the temperature of the water in the outlet (7) to a predetermined value via the steam valve (4).

4. A mixer as claimed in claim 3,
characterized by
a drive (8) which operates the steam valve (4) and which is actuated by the throughflow meter (1) and the controller (6), comprising a return mechanism which closes the steam valve (4) in the non-actuated state or in the event of a power supply failure affecting the drive (8).

5. A mixer as claimed in claim 4,
characterized in that
the return mechanism is in the form of a return spring.

6. A mixer as claimed in any of claims 3 to 5, characterized by a non-return valve (9) arranged between the steam valve (4) and the mixing vessel (3).

7. A mixer as claimed in any of claims 3 to 6,
characterized by
a non-return valve (10) arranged between the throughflow meter (1) and the mixing vessel (3).

## Revendications

1. Mélangeur de vapeur et d'eau avec une entrée pour la vapeur et une entrée pour l'eau, avec une cuve (3) pour mélanger la vapeur et l'eau, avec une sortie (7) de cette cuve de mélange (3) pour l'eau chauffée et avec un matériau (13) placé de telle façon à l'intérieur de la cuve de mélange (3) entre la ou les entrées de vapeur (11) et la ou les entrées d'eau, que la vapeur entrant dans la cuve de mélange (3) est obligée de passer à travers ce matériau (13) pour parvenir à l'entrée d'eau (12) ou à la sortie (14) de la cuve de mélange (3), caractérisé en ce que

le matériau est un matériau fritté (13).

2. Mélangeur selon la revendication 1,
caractérisé en ce que
le matériau fritté (13) a la forme d'un cylindre creux.

3. Mélangeur selon la revendication 1 ou 2,
caractérisé par :

a) un débitmètre (1) placé entre l'entrée d'eau (2) et la cuve de mélange (3), qui ouvre une vanne de vapeur (4) placée entre l'entrée de vapeur (5) et la cuve de mélange (3), seulement quand est dépassé un courant d'eau minimal (2) à l'entrée d'eau, et

b) un thermocouple placé à la sortie (7) mesurant la température de l'eau sortant, qui est raccordé à un dispositif de régulation (6), qui régule la température de l'eau à la sortie (7) par la vanne de vapeur (4) à une valeur fixée.

4. Mélangeur selon la revendication 3,
caractérisé par
un entraînement (8) commandé par le débitmètre (1) et le dispositif de commande (6), actionnant la vanne de vapeur (4) avec un retour à l'origine qui ferme la vanne de vapeur (4) quand il n'y a pas de régulation ou en cas de panne d'alimentation en énergie de l'entraînement (8).

5. Mélangeur selon la revendication 4,
caractérisé en ce que
le retour à l'origine est un retour à l'origine à ressort.

6. Mélangeur selon l'une des revendications 3 à 5,
caractérisé par
une soupape de retenue (9) placée entre la vanne de vapeur (4) et la cuve de mélange (3).

7. Mélangeur selon l'une des revendications 3 à 6, caractérisé par une soupape de retenue (10) placée entre le débitmètre (1) et la cuve de mélange (3).

DAMPF

5
15
8
9
11
3
13
20
12
19
12
10
14
1
17
18
25
7
2
WASSER
24
28
29

Fig. 1

Fig. 2

Fig.3

Fig. 4